# EUROPÄISCHE PATENTSCHRIFT

(11) **EP 4 063 233 B1**
(45) Veröffentlichungstag und Bekanntmachung des Hinweises auf die Patenterteilung: **21.01.2026**
(21) Anmeldenummer: 22155169.0
(22) Anmeldetag: 04.02.2022
(51) Int. Cl.: B61L 17/02, B61L 27/40, B61L 27/04, B61L 27/20

(54) **VERFAHREN ZUR ÜBERWACHUNG EINER RUHEABSCHALTUNG EINES SCHIENENFAHRZEUGS**
METHOD FOR MONITORING A DEACTIVATION OF A RAILWAY VEHICLE
PROCÉDÉ DE SURVEILLANCE D'UN ARRÊT DE REPOS D'UN VÉHICULE FERROVIAIRE

(30) Priorität: 24.03.2021 DE 102021202894
(43) Veröffentlichungstag der Anmeldung: 28.09.2022
(73) Patentinhaber: Siemens Mobility GmbH, 80997 München (DE)
(72) Erfinder: Muxfeldt, Arne, 38110 Braunschweig (DE); Rahn, Karsten, 38162 Cremlingen (DE); Schossig, Frauke, 38118 Braunschweig (DE); Ueckert, Steffen, 31275 Lehrte (DE)
(74) Vertreter: Siemens Patent Attorneys

(56) Entgegenhaltungen:
- DE-A1- 102013 219 812
- DE-A1- 102019 200 887
- US-A1- 2018 312 182

## Beschreibung

Die Erfindung betrifft ein Verfahren zur Überwachung einer Ruheabschaltung eines Schienenfahrzeugs.

Bei der Abschaltung von Schienenfahrzeugen in eine Ruheabschaltung, in der die Systeme des Schienenfahrzeugs vollständig abgeschaltet werden, sind abgeschaltete Schienenfahrzeuge nicht mehr in der Lage, mit einem Steuerzentrum zu kommunizieren, um beispielsweise eine Positionsangabe zu übermitteln. Derartige Schienenfahrzeuge sind somit für das Steuerzentrum nahezu unsichtbar. Positionsbestimmungen abgeschalteter Schienenfahrzeuge können daher nur über ungenaue gleisseitige Positionsbestimmungssysteme erreicht werden. Diese ungenauen Positionsbestimmungen der abgeschalteten Schienenfahrzeuge führen im Stand der Technik häufig dazu, dass entweder mehrere Schienenfahrzeuge auf einem Gleis zeitgleich in die Ruheabschaltung geschaltet werden oder, wenn dies nicht möglich ist, dass Abstellgleise, auf denen bereits in die Ruheabschaltung geschaltete Schienenfahrzeuge abgestellt sind, nicht zum Abstellen weiterer Schienenfahrzeuge verwendet werden können.

Bei einem aus der Druckschrift US 2018/0312182 A1 bekannten Verfahren zur Verwendung eines automatischen Zugsteuersystems ist vorgesehen, dass eine Komponente an Bord eines Zuges (Bord-ATC) von einem aktiven Betriebsmodus in einen Standby-Betriebsmodus und umgekehrt umschaltbar ist, wobei in dem Standby-Betriebsmodus eine Odometrieeinrichtung, ein Hauptrechner, eine Weckeinrichtung und eine Funkkommunikationseinrichtung an Bord des Zuges mit elektrischer Leistung versorgt bleiben. Im Standby- Betriebsmodus überprüft der Hauptrechner, ob die von der Odometrieeinrichtung gemessene Bewegung des Zuges seit einem Zeitpunkt des Umschaltens von dem aktiven Betriebsmodus in den Standby-Betriebsmodus null ist. Im positiven Fall wird eine momentane Position des Zuges unter Verwendung der Funkkommunikationseinrichtung an eine Bodenkomponente (Boden-ATC) übertragen. Im negativen Fall macht der Hauptrechner die momentane Position des Zuges ungültig. In diesem negativen Fall muss der Zug eine Phase einer Initialisierung der momentanen Position durchführen, bevor er in den aktiven Betriebsmodus umschaltet. In der Phase der Initialisierung wird der Zug auf Sicht bewegt, bis er eine Positionsbake kreuzt, von der aus die Bord-ATC in der Lage ist, die momentane Position des Zuges zu berechnen.

Der Erfindung liegt die Aufgabe zugrunde, ein verbessertes Verfahren zur Überwachung einer Ruheabschaltung eines Schienenfahrzeugs bereitzustellen.

Diese Aufgabe wird durch ein Verfahren und eine Recheneinheit zur Überwachung einer Ruheabschaltung eines Schienenfahrzeugs gemäß den unabhängigen Ansprüchen 1 und 8 gelöst. Vorteilhafte Ausgestaltungen sind Gegenstand der untergeordneten Ansprüche.

Nach einem Aspekt der Erfindung wird ein Verfahren zur Überwachung einer Ruheabschaltung eines Schienenfahrzeugs bereitgestellt, wobei das Verfahren umfasst:
- Empfangen einer Positionsangabe eines in einem Gleissegment eines Abstellgleises positionierten Schienenfahrzeugs;
- Empfangen einer Abschaltbestätigung des Schienenfahrzeugs, wobei die Abschaltbestätigung angibt, dass das Schienenfahrzeug in eine Ruheabschaltung geschaltet wird;
- Überprüfen, ob das Schienenfahrzeug beim Schalten in die Ruheabschaltung wenigstens eine Sicherheitsvoraussetzung erfüllt, wobei die Sicherheitsvoraussetzung eine sichere Positionierung des Schienenfahrzeugs in der Ruheabschaltung bestätigt; und
- falls die wenigstens eine Sicherheitsvoraussetzung erfüllt ist, Bestimmen einer Position des Schienenfahrzeugs in Ruheabschaltung in dem jeweiligen Gleissegment basierend auf der vom Schienenfahrzeug übertragenen Positionsangabe des Schienenfahrzeugs, und Freigeben wenigstens eines weiteren Gleissegments des Abstellgleises für eine Ruheabschaltung wenigstens eines weiteren Schienenfahrzeugs,
- falls die wenigstens eine Sicherheitsvoraussetzung nicht erfüllt ist, Bestimmen einer Position des Schienenfahrzeugs in Ruheabschaltung in dem jeweiligen Gleissegment basierend auf Positionsdaten eines gleisseitigen Positionsbestimmungssystems und/oder Sperren des wenigstens einen weiteren Gleissegments des Abstellgleises für eine Ruheabschaltung wenigstens eines weiteren Schienenfahrzeugs.

Hierdurch kann der technische Vorteil erreicht werden, dass ein verbessertes Verfahren zur Überwachung einer Ruheabschaltung eines Schienenfahrzeugs bereitgestellt werden kann. Außerdem kann hierdurch der technische Vorteil erreicht werden, dass eine effiziente Ausnutzung des Abstellgleises zum Abstellen weiterer Schienenfahrzeuge erreicht werden kann.

Das erfindungsgemäße Verfahren sieht hierzu vor, bei Erfüllung der wenigstens einen Sicherheitsvoraussetzung das in die Ruheabschaltung geschaltete Schienenfahrzeug, das für ein Steuerzentrum ansonsten unsichtbar wäre, was die Positionierung betrifft, weiterhin wie ein Schienenfahrzeug im Betriebsmodus zu betrachten. Hierzu wird die zuletzt übertragene Positionsangabe des Schienenfahrzeugs, die basierend auf dem Positionierungssystem des Schienenfahrzeugs eine präzise Positionsermittlung des Schienenfahrzeugs darstellt, als aktuelle Position des abgeschalteten Schienenfahrzeugs interpretiert. Die erfüllte wenigstens eine Sicherheitsvoraussetzung gewährleistet hierbei, dass die zuletzt übermittelte Positionsangabe auch nach Abschaltung des Schienenfahrzeugs weiterhin Gültigkeit aufweist, da eine Änderung der Positionierung des Schienenfahrzeugs in der Ruheabschaltung höchst unwahrscheinlich ist. Da die Positionsbestimmung basierend auf der Positionsangabe des Schienenfahrzeugs mit weitaus höherer Präzision erfolgt, als dies durch das schienenseitige Positionsbestimmungssystem ermöglicht wäre, kann eine verbesserte Auslastung des Abstellgleises durch weitere abzustellende und in eine entsprechende Ruheabschaltung zu bringende Schienenfahrzeuge ermöglicht werden. Weitere Schienenfahrzeuge können somit in weiteren Gleissegmenten des Abstellgleises positioniert werden, da aufgrund der hochpräzisen Positionsbestimmung basierend auf der zuletzt übertragenen Positionsangabe des Schienenfahrzeugs in der Ruheabschaltung die weiteren Schienenfahrzeuge unter Berücksichtigung der jeweiligen Positionierung in die entsprechenden Gleissegmente gesteuert werden können.

Eine Ruheabschaltung eines Schienenfahrzeugs ist im Sinne der Anmeldung eine vollständige Abschaltung aller Systeme des Schienenfahrzeugs zum Überführen des Schienenfahrzeugs in einen Ruhezustand.

Ein Abstellgleis ist im Sinne der Anmeldung ein Gleisabschnitt zum temporären Abstellen oder Parken von Schienenfahrzeugen, die wenigstens temporär nicht betrieben bzw. nicht verfahren werden sollen. Ein Abstellgleis kann beispielsweise ein Nebengleis sein oder sich in einem Rangierbahnhof oder einem Depot befinden und dazu dienen, abzustellende Schienenfahrzeuge aufzunehmen. Das Abstellen kann beispielsweise zu Reparatur- oder Reinigungszwecken oder zur Lagerung derzeit nicht verwendeter Schienenfahrzeuge dienen.

Eine Positionsangabe ist im Sinne der Anmeldung eine vom jeweiligen Schienenfahrzeug ausgesendete Nachricht inklusive entsprechender Positionsdaten, die auf einem fahrzeugseitigen Positionsbestimmungssystem basieren.

Eine Abschaltbestätigung ist im Sinne der Anmeldung eine Nachricht des Schienenfahrzeugs, in der einem Steuerzentrum die Abschaltung die Ruheabschaltung des Fahrzeugs angezeigt wird.

Bei Erfüllen der wenigstens einen Sicherheitsvoraussetzung wird wenigstens ein weiteres Gleissegment des Abstellgleises für eine Ruheabschaltung wenigstens eines weiteren Schienenfahrzeugs freigegeben. Aufgrund der erfüllten Sicherheitsvoraussetzung kann gewährleistet werden, dass die Position des abgeschalteten Schienenfahrzeugs weiterhin der zuletzt durch das Schienenfahrzeug übertragenen Positionsangabe entspricht. Unter Berücksichtigung dieser Positionsangabe als aktuelle Position des abgeschalteten Schienenfahrzeugs können somit weitere Gleissegmente gefahrlos durch weitere Schienenfahrzeuge befahren werden und diese Gleissegmente entsprechend zur Ruheabschaltung der weiteren Schienenfahrzeuge genutzt werden.

Bei Nichterfüllen der wenigstens einen Sicherheitsvoraussetzung kann nicht gewährleistet werden, dass bei Abschaltung des Schienenfahrzeugs die zuletzt angegebene Position weiterhin beibehalten wird.

Wird das wenigstens eine Sicherheitskriterium nicht erfüllt, wird die Positionierung des abgeschalteten Schienenfahrzeugs basierend auf dem gleisseitigen Positionsbestimmungssystem durchgeführt, sodass eine gesicherte Positionsbestimmung ermöglicht ist, und/oder das wenigstens eine weitere Gleissegment wird für eine Ruheabschaltung weiterer Schienenfahrzeuge gesperrt, sodass eine erhöhte Sicherheit des Betriebs der Schienenfahrzeuge erreicht wird, indem keine weiteren Schienenfahrzeuge auf das jeweilige Abstellgleis gefahren werden, da aufgrund der nicht erfüllten Sicherheitsvoraussetzung nicht gewährleistet werden kann, dass sich das abgeschaltete Schienenfahrzeug weiterhin in der zuletzt bekannten Position der zuletzt übertragenen Positionsangabe befindet.

Im Sinne der Anmeldung umfasst ein Freigeben eines Gleissegments für die Ruheabschaltung weiterer Schienenfahrzeuge sowohl ein Überführen des Gleissegments aus einem gesperrten Zustand in einen nun für weitere Schienenfahrzeuge zugänglichen Zustand als auch das Aufrechterhalten eines Gleissegments in einem für weitere Schienenfahrzeuge zugänglichen Zustand.

Nach einer Ausführungsform umfasst die wenigstens eine Sicherheitsvoraussetzung:
- dass das Gleissegment ein für eine Ruheabschaltung eines Schienenfahrzeugs vorgesehenes Gleissegment ist; und/oder
- dass das Gleissegment eine Steigung aufweist, die unterhalb eines vorbestimmten Grenzwerts liegt; und/oder
- dass eine Feststellbremse des Schienenfahrzeugs betätigt ist; und/oder
- dass ein Schalten des Schienenfahrzeugs in die Ruheabschaltung gemäß einem in einem Steuerungsprotokoll vordefinierten Abschaltvorgang für eine Abschaltung von Schienenfahrzeugen in eine Ruheabschaltung eingeleitet ist; und/oder
- dass eine Bereitschaftsangabe des Schienenfahrzeugs zum Schalten in die Ruheabschaltung empfangen wurde.

Hierdurch kann der technische Vorteil erreicht werden, dass in Form der Sicherheitsvoraussetzung bzw. einer Mehrzahl von Sicherheitsvoraussetzungen eine Gewährleistung für das Einhalten der zuletzt übertragenen Positionsangabe durch das abgeschaltete Schienenfahrzeug ermöglicht ist. Durch Berücksichtigung des Gleissegments und insbesondere der Eignung zum Abstellen in die Ruheabschaltung eines Schienenfahrzeugs kann gewährleistet werden, dass das Schienenfahrzeug nicht auf einem beliebigen Gleisabschnitt abgeschaltet wird. Durch die Berücksichtigung der Steigung des Gleissegments, wobei die Steigung im Sinne der Anmeldung sowohl einen positiven als auch negativen Wert annehmen kann, kann gewährleistet werden, dass selbst bei Lösen einer Bremse ein Wegrollen des Schienenfahrzeugs von der zuletzt bestimmten Position vermieden ist. Durch Berücksichtigung eines Anziehens einer Feststellbremse des Schienenfahrzeugs kann ebenfalls gewährleistet werden, dass ein Wegrollen des abgeschalteten Schienenfahrzeugs verhindert ist. Durch Berücksichtigung des Abschaltvorgangs kann gewährleistet werden, dass das Abschalten des Schienenfahrzeugs in die Ruheabschaltung einem intendierten Abschalten entspricht und nicht auf Fehlfunktionen einer Steuerung des Schienenfahrzeugs basieren. Gleiches gilt für die Berücksichtigung einer Bereitschaftsangabe, die ebenfalls ein intendiertes Abschalten anzeigt.

Nach einer Ausführungsform ist das Abstellgleis gemäß dem Grenzwert im Gleissegment planar und ohne Steigung bzw. Gefälle ausgebildet. Hierdurch kann erreicht werden, dass selbst bei fehlerhafter Bremse das Schienenfahrzeug in der jeweiligen Position verbleibt.

Im Sinne der Anmeldung ist eine Steigung einem Gefälle gleichzusetzen und kann somit sowohl positive wie negative Werte annehmen.

Nach einer Ausführungsform wird das Schalten des Schienenfahrzeugs in die Ruheabschaltung durch eine automatische Abschalteinrichtung einer automatischen Schienenfahrzeugüberwachung des Schienenfahrzeugs oder durch ein autorisiertes Schienenfahrzeugpersonal eingeleitet.

Hierdurch kann der technische Vorteil erreicht werden, dass sowohl eine automatische Abschaltung durch eine automatische Schienenfahrzeugüberwachung des Schienenfahrzeugs oder eine manuelle Abschaltung durch entsprechend autorisiertes Schienenfahrzeugpersonal berücksichtigt werden kann.

Nach einer Ausführungsform ist das Steuerungsprotokoll durch eine kommunikationsbasierte Schienenfahrzeugsteuerung gebildet.

Hierdurch kann der technische Vorteil erreicht werden, dass das erfindungsgemäße Verfahren unter Berücksichtigung der kommunikationsbasierten Schienenfahrzeugsteuerung (communication based train control CBTC) ausführbar ist und somit kompatibel mit Standards für den vollautomatisierten fahrerlosen Schienenverkehrsbetrieb ist.

Nach einer Ausführungsform werden die empfangene Positionsangabe des Schienenfahrzeugs als aktuelle Position des Schienenfahrzeugs in der Ruheabschaltung in dem jeweiligen Gleissegment gespeichert und das wenigstens eine weitere Gleissegment des Abstellgleises für eine Ruheabschaltung wenigstens eines weiteren Schienenfahrzeugs freigegeben, nur falls alle der in Anspruch 2 genannten Sicherheitsvoraussetzungen erfüllt sind.

Hierdurch kann der technische Vorteil erreicht werden, dass hohe Sicherheitsstandards bei der Überwachung der Ruheabschaltung der Schienenfahrzeuge und insbesondere bei der Belegung von Gleissegmenten von Abstellgleisen durch eine Mehrzahl von abzuschaltenden Schienenfahrzeugen erfüllt werden können. Indem alle oben genannten Sicherheitsvoraussetzungen erfüllt sein müssen, damit die zuletzt übertragene Positionsangabe des Schienenfahrzeugs als aktuelle Position des in die Ruheabschaltung geschalteten Schienenfahrzeugs verwendet und gegebenenfalls entsprechende weitere Gleissegmente des jeweiligen Abstellgleises für die Ruheabschaltung weiterer Schienenfahrzeuge freigegeben werden, kann mit hoher Sicherheit gewährleistet werden, dass eine Positionsänderung des abgeschalteten Schienenfahrzeugs gegenüber der zuletzt kommunizierten Positionsangabe nicht eintritt. Hiermit können beliebige weitere Gleissegmente gefahrlos für weitere Schienenfahrzeuge zur Ruheabschaltung freigegeben werden.

Nach einer Ausführungsform umfasst das Verfahren ferner:
- Empfangen von Sensordaten wenigstens eines streckenseitig am Gleissegment des Abstellgleises angeordneten Sensors, wobei der Sensor eingerichtet ist, eine Bewegung des Schienenfahrzeugs innerhalb des Gleissegments zu registrieren; und
- Sperren des wenigstens einen weiteren Gleissegments des **Ab**stellgleises für eine Ruheabschaltung wenigstens eines weiteren Schienenfahrzeugs, falls anhand der Sensordaten eine Bewegung des in die Ruheabschaltung geschalteten Schienenfahrzeugs innerhalb des Gleissegments registriert wird.

Hierdurch kann der technische Vorteil erreicht werden, dass eine weitere Sicherung der Positionsbestimmung des in die Ruheabschaltung geschalteten Schienenfahrzeugs ermöglicht ist. Über die Berücksichtigung von Sensordaten gleisseitig angebrachter Sensoren, die eingerichtet sind, eine Bewegung des Schienenfahrzeugs innerhalb des jeweiligen Gleissegments zu registrieren, kann bei registrierter Bewegung des abgeschalteten Schienenfahrzeugs das wenigstens eine freigegebene Gleissegment für weitere Schienenfahrzeuge gesperrt werden. Aufgrund der nicht erwarteten Bewegung des Schienenfahrzeugs ist eine Belegung weiterer Gleissegmente des Abstellgleises nicht gesichert möglich, da eine Positionsbestimmung des bewegten abgeschalteten Schienenfahrzeugs nicht eindeutig möglich ist. Durch die Sperrung der weiteren Gleissegmente können entsprechende Kollisionen weiterer Schienenfahrzeuge mit dem abgeschalteten Schienenfahrzeug vermieden werden.

Nach einem zweiten Aspekt wird eine Recheneinheit bereitgestellt, wobei die Recheneinheit eingerichtet ist, das erfindungsgemäße Verfahren zur Überwachung einer Ruheabschaltung eines Schienenfahrzeugs nach einer der voranstehenden Ausführungsformen auszuführen.

Nach einem dritten Aspekt wird ein System zur Überwachung einer Ruheabschaltung eines Schienenfahrzeugs mit einem Steuerzentrum zum Steuern eines Schienenverkehrs und wenigstens einem Abstellgleis mit einer Mehrzahl von Gleissegmenten für die Ruheabschaltung von Schienenfahrzeugen, wobei am Abstellgleis innerhalb wenigstens eines Gleissegments ein gleisseitiges Positionsbestimmungssystem angeordnet ist, das ausgebildet ist, eine Position eines Schienenfahrzeugs innerhalb des Gleissegments zu bestimmen, wobei das Steuerzentrum eingerichtet ist, mittels einer Datenkommunikation mit wenigstens einem Schienenfahrzeug zu kommunizieren und Daten des gleisseitigen Positionsbestimmungssystems zu empfangen, und wobei das Steuerzentrum eine Recheneinheit umfasst, die eingerichtet ist, das erfindungsgemäße Verfahren zur Überwachung einer Ruheabschaltung eines Schienenfahrzeugs nach einer der voranstehenden Ausführungsformen auszuführen.

Hierdurch kann der technische Vorteil erreicht werden, dass ein verbessertes System zur Überwachung einer Ruheabschaltung eines Schienenfahrzeugs bereitgestellt werden kann, dass eingerichtet ist, das erfindungsgemäße Verfahren zur Überwachung einer Ruheabschaltung eines Schienenfahrzeugs mit den oben genannten technischen Vorteilen auszuführen.

Nach einer Ausführungsform umfasst das System ferner einen Sensor, wobei der Sensor innerhalb wenigstens eines Gleissegments am Abstellgleis angeordnet ist, und wobei der Sensor eingerichtet ist, eine Bewegung des Schienenfahrzeugs innerhalb des Gleissegments zu registrieren.

Hierdurch kann erreicht werden, dass eine Bewegung des Schienenfahrzeugs in der Ruheabschaltung registriert werden kann. Hierdurch kann eine Sicherheitsvoraussetzung des sich in der Ruheabschaltung befindlichen Schienenfahrzeugs und/oder weiterer Schienenfahrzeuge abgesichert werden.

Nach einer Ausführungsform ist der Sensor ein Sensor des gleisseitigen Positionsbestimmungssystems.

Hierdurch kann der technische Vorteil erreicht werden, dass keine zusätzlichen Sensoren gleisseitig verbaut werden müssen. Dies verringert die benötigte Hardware und senkt Produktions- wie auch Betriebs- Wartungskosten des Systems.

Nach einer Ausführungsform umfasst das gleisseitige Positionsbestimmungssystem wenigstens eine Achszählereinheit.

Hierdurch kann der technische Vorteil erreicht werden, dass eine robuste gleisseitige Positionsbestimmung und/oder Bewegungsdetektion erreicht werden kann.

Nach einer Ausführungsform ist das Schienenfahrzeug für einen Schienenfahrzeugbetrieb mit Fahrt auf Sicht und/oder für eine manuelle Fahrt mit Schienenfahrzeugbeeinflussung und/oder für einen halbautomatischen Schienenfahrzeugbetrieb und/oder für einen begleiteten fahrerlosen Schienenfahrzeugbetrieb und/oder für einen vollautomatischen fahrerlosen Schienenfahrzeugbetrieb eingerichtet.

Nach einem vierten Aspekt der Erfindung wird ein Computerprogrammprodukt umfassend Befehle bereitgestellt, die bei der Ausführung des Programms durch eine Datenverarbeitungseinheit diese veranlassen, das erfindungsgemäße Verfahren zur Überwachung einer Ruheabschaltung eines Schienenfahrzeugs nach einer der voranstehenden Ausführungsformen auszuführen.

Die oben beschriebenen Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen jeweils:
- FIG 1: eine schematische Darstellung eines Systems zur Überwachung einer Ruheabschaltung eines Schienenfahrzeugs gemäß einer Ausführungsform, wobei das System in einem Betriebszustand vor der Ruheabschaltung eines Schienenfahrzeugs gezeigt ist;
- FIG 2: eine weitere schematische Darstellung eines Systems zur Überwachung einer Ruheabschaltung eines Schienenfahrzeugs gemäß einer Ausführungsform, wobei das System in einem Betriebszustand nach der Ruheabschaltung eines Schienenfahrzeugs gezeigt ist;
- FIG 3: eine weitere schematische Darstellung eines Systems zur Überwachung einer Ruheabschaltung eines Schienenfahrzeugs gemäß einer Ausführungsform, wobei das System in einem Betriebszustand nach der Ruheabschaltung eines Schienenfahrzeugs bei detektierter Bewegung des Fahrzeugs gezeigt ist;
- FIG 4: ein Flussdiagramm eines Verfahrens zur Überwachung einer Ruheabschaltung eines Schienenfahrzeugs gemäß einer Ausführungsform; und
- FIG 5: eine schematische Darstellung eines Computerprogrammprodukts.

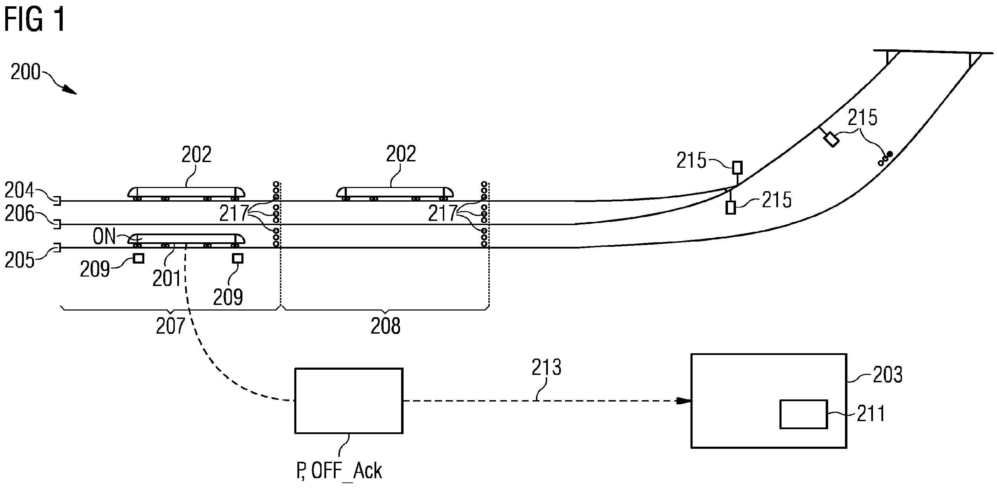

FIG 1 zeigt eine schematische Darstellung eines Systems 200 zur Überwachung einer Ruheabschaltung eines Schienenfahrzeugs 201 gemäß einer Ausführungsform, wobei das System 200 in einem Betriebszustand vor der Ruheabschaltung eines Schienenfahrzeugs 201 gezeigt ist.

Das System 200 zur Überwachung einer Ruheabschaltung eines Schienenfahrzeugs 201 umfasst in der gezeigten Ausführungsform drei Abstellgleise 204, 205, 206. Die Abstellgleise 204 205, 206 sind jeweils in ein Segment 207 und ein weiteres Segment 208 eingeteilt. Auf dem Abstellgleis 205 ist im Segment 207 ein Schienenfahrzeug 201 positioniert. Auf dem Abstellgleis 204 sind in beiden Gleissegmenten 207, 208 jeweils ein weiteres Schienenfahrzeug 202 positioniert, während im mittleren Abstellgleis 206 keine Schienenfahrzeuge angeordnet sind.

Das System 200 umfasst ferner ein Steuerzentrum 203 zur Steuerung eines Schienenverkehrs einer Mehrzahl von Schienenfahrzeugen 201, 202. Das Steuerzentrum 203 umfasst eine Recheneinheit 211, die eingerichtet ist, das erfindungsgemäße Verfahren zur Überwachung einer Ruheabschaltung eines Schienenfahrzeugs auszuführen. Das Steuerzentrum 203 ist ferner eingerichtet, über eine Datenkommunikation 213 mit dem Schienenfahrzeug 201 und den weiteren Schienenfahrzeugen 202 zu kommunizieren.

In der gezeigten Ausführungsform ist am Abstellgleis 205 im Gleissegment 207 ferner ein gleisseitiges Positionsbestimmungssystem 209 angeordnet. Neben der hier gezeigten Ausführungsform kann das gleisseitige Positionsbestimmungssystem 209 alternativ an allen Abstellgleisen 204, 205, 206 in ein Gleissegment 207, 208 und/oder auch an weiteren Stellen der Gleisführung angeordnet sein.

Ferner umfassen die Abstellgleise 204, 205, 206 Signalleuchten 215, mit denen eine Ansteuerung der Schienenfahrzeuge 201, 202 ermöglicht ist. Weiterhin weisen die Abstellgleise 204, 205, 206 an den Grenzen der Gleissegmente 207, 208 entsprechende Signalleuchten 217 auf, mittels denen eine Begrenzung der Gleissegmente 207, 208 und gegebenenfalls eine Positionierung eines darin angeordneten Schienenfahrzeugs 201, 202 für weitere Schienenfahrzeuge angezeigt werden können.

In der gezeigten Darstellung befindet sich das Schienenfahrzeug 201 in einem Betriebszustand ON und ist somit in der Lage über die Datenkommunikation 213 mit dem Steuerzentrum 203 zu kommunizieren. Die weiteren Schienenfahrzeuge 202 können sich sowohl in einem Betriebszustand als auch in der Ruheabschaltung befinden und werden bezüglich der Illustration des erfindungsgemäßen Verfahrens im Weiteren nicht weiter berücksichtigt werden.

In der gezeigten Darstellung überträgt das im Betriebszustand ON befindliche Schienenfahrzeug 201 eine Positionsangabe P und eine Abschaltbestätigung OFF_Ack an das Steuerzentrum 203. Die Positionsangabe P umfasst hierbei eine über ein Positionierungssystem des Schienenfahrzeugs 201 bestimmte Positionierung des Schienenfahrzeugs innerhalb des Gleissegments 207 als eine aktuelle Position des Schienenfahrzeugs 201. Die Abschaltbestätigung OFF_Ack ist ebenfalls eine Kommunikationsnachricht und umfasst Angaben darüber, dass das Schienenfahrzeug 201 sich kurz vor einer Schaltung in die Ruheabschaltung befindet.

Zur Ausführung des erfindungsgemäßen Verfahrens und zur Überwachung der Ruheabschaltung des Schienenfahrzeugs 201 wird darauf folgend durch das Steuerzentrum 203 überprüft, ob das Schienenfahrzeug 201 wenigstens eine Sicherheitsvoraussetzung erfüllt. Die Sicherheitsvoraussetzung ist hierbei derart ausgebildet, dass bei Erfüllung der wenigstens einen Sicherheitsvoraussetzung gewährleistet ist, dass nach Abschaltung des Schienenfahrzeugs 201 in die Ruheabschaltung eine Position des Schienenfahrzeugs 201 unverändert bleibt.

Zur Überprüfung der Sicherheitsvoraussetzungen kann das Steuerzentrum 203 beispielsweise überprüfen, ob das jeweilige Gleissegment 207, in dem sich das Schienenfahrzeug 201 derzeit befindet, für eine Ruheabschaltung eines Schienenfahrzeugs vorgesehen ist und sich das Schienenfahrzeug 201 nicht fälschlicherweise auf einem beliebigen Gleisabschnitt in die Ruheabschaltung schaltet.

Das Steuerzentrum 203 kann ferner überprüfen, ob eine Steigung oder ein Gefälle des Abstellgleises 205 innerhalb des jeweiligen Gleissegments 207 einem vorbestimmten Grenzwert entspricht. Der Grenzwert kann hierbei eine Steigung bzw. Gefälle von 0° voraussetzen.

Ferner kann überprüft werden, ob die Abschaltung des Schienenfahrzeugs in die Ruheabschaltung gemäß einem vordefinierten Abschaltvorgang des Steuerungsprotokolls entspricht. Das Steuerungsprotokoll kann hierbei durch die kommunikationsbasierte Schienenfahrzeugsteuerung (CBTC) ausgebildet sein. Der vordefinierte Abschaltvorgang kann hierbei eine Mehrzahl nacheinander oder zeitgleich auszuführender Handlungen oder Maßnahmen umfassen, mittels denen eine sichere Abschaltung des Schienenfahrzeugs ermöglicht ist. Die jeweilige Sicherheitsvoraussetzung kann hierbei sowohl eine Ausführung der jeweiligen Maßnahmen und Handlung als auch eine jeweilige Reihenfolge der Ausführungen berücksichtigen.

Ferner kann überprüft werden, ob eine Feststellbremse des Schienenfahrzeugs betätigt ist.

Ferner kann überprüft werden, ob eine Bereitschaftsangabe des Schienenfahrzeugs 201 zum Schalten in die Ruheabschaltung empfangen wurde.

Bei Vorliegen wenigstens einer der oben genannten Sicherheitsvoraussetzungen oder bei Vorliegen einer Mehrzahl oder gegebenenfalls aller genannter Sicherheitsvoraussetzungen kann das Steuerzentrum 203 nach Abschalten des Schienenfahrzeugs 201 in die Ruheabschaltung die zuletzt durch das Schienenfahrzeug 201 vor Abschaltung in die Ruheabschaltung an das Steuerzentrum 203 übertragene Positionsangabe als aktuelle Position des nunmehr in die Ruheabschaltung abgeschalteten Schienenfahrzeugs 201 verwenden. Ferner kann das weitere Gleissegment 208 bei Erfüllung der Sicherheitsvoraussetzungen durch das Steuerzentrum 203 zur weiteren Belegung durch weitere Schienenfahrzeuge zur Ruheabschaltung freigegeben werden. Das Freigeben des weiteren Gleissegments 208 besagt hierbei, dass weitere Schienenfahrzeuge in dem weiteren Gleissegment 208 positioniert werden können. Das weitere Gleissegment 208 kann hierzu in einem nichtgesperrten Zustand vorliegen, wie dies in der gezeigten Darstellung für die Gleissegmente 207, 208 des mittleren Abstellgleises 206 vorliegt, die für beliebige Schienenfahrzeuge freigegeben und durch diese befahrbar sind. Alternativ kann das weitere Gleissegment 208 durch das Freigeben aus einem zunächst gesperrten Zustand, in dem das Befahren durch weitere Schienenfahrzeuge untersagt ist, in den entsprechend nichtgesperrten Zustand überführt werden.

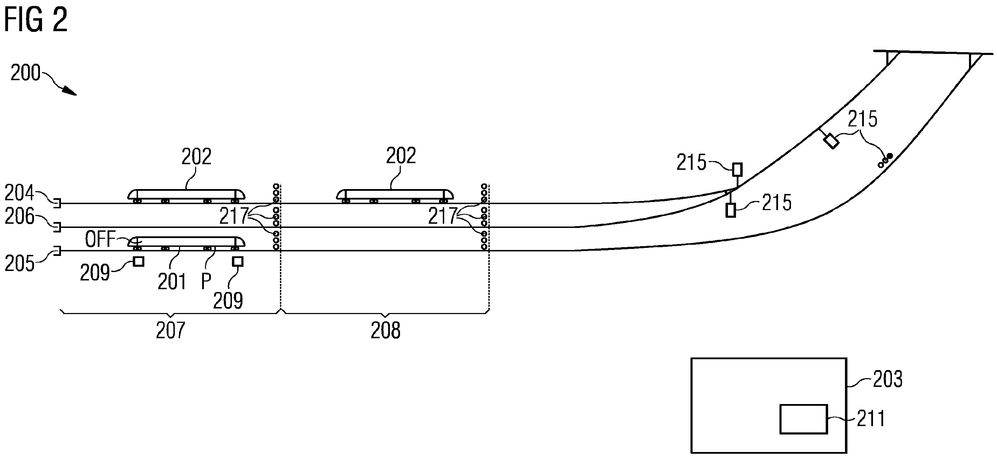

FIG 2 zeigt eine weitere schematische Darstellung eines Systems 200 zur Überwachung einer Ruheabschaltung eines Schienenfahrzeugs 201 gemäß einer Ausführungsform, wobei das System 200 in einem Zustand nach der Ruheabschaltung eines Schienenfahrzeugs 201 gezeigt ist.

FIG 2 basiert auf der Darstellung in FIG 1 und stellt den Sachverhalt dar, dass das Schienenfahrzeug 201 erfolgreich in die Ruheabschaltung OFF geschaltet ist. Ferner ist die wenigstens eine Sicherheitsvoraussetzung, bzw. die Mehrzahl von Sicherheitsvoraussetzungen, erfüllt. Demzufolge wird eine Positionsbestimmung einer Position des Schienenfahrzeugs 201 in der Ruheabschaltung OFF durch das Steuerzentrum 203 basierend auf der durch das Schienenfahrzeug 201 zuletzt an das Steuerzentrum 203 übertragenen Positionsangabe P durchgeführt. Die Position des nunmehr in die Ruheabschaltung OFF geschalteten Schienenfahrzeugs 201 entspricht somit der Position der Positionsangabe P, die auf dem Positionierungssystem des Schienenfahrzeugs 201 beruht. Mittels der Positionsangabe kann das Schienenfahrzeug 201 durch das Steuerzentrum 203 präzise innerhalb des Gleissegments 207 positioniert werden, was in FIG 2 dadurch gekennzeichnet ist, dass das nunmehr abgeschaltete Schienenfahrzeug 201 weiterhin als solches dargestellt und nicht lediglich das komplette Gleissegment 207 als belegt gekennzeichnet ist.

Ferner ist das weitere Gleissegment 208 aufgrund der erfüllten Sicherheitsvoraussetzungen für ein Befahren bzw. ein Positionieren eines weiteren Schienenfahrzeugs zur Ruheabschaltung freigegeben.

In Bezug auf die Positionsbestimmung wird das Schienenfahrzeug 201 bei Erfüllung der Sicherheitsvoraussetzungen in der Ruheabschaltung OFF wie ein sich weiterhin im Betriebszustand ON befindliches Schienenfahrzeug interpretiert, das weiterhin Positionsangaben bezüglich einer aktuellen Position an das Steuerzentrum 203 übermittelt. Da aufgrund der erfüllten Sicherheitsvoraussetzungen, die mit hoher Wahrscheinlichkeit gewährleisten, dass die Positionierung des Schienenfahrzeugs nach Abschaltung in die Ruheabschaltung unverändert zur zuletzt übertragenen Positionsangabe verbleibt, kann die Position des Schienenfahrzeugs somit mit hoher Zuverlässigkeit durch die zuletzt übertragene Positionsangabe des Schienenfahrzeugs 201 angegeben werden. Hierdurch kann die Positionsbestimmung des in die Ruheabschaltung OFF geschalteten Schienenfahrzeugs 201 mit einer höheren Präzision erfolgen, als dies ermöglicht wäre, wenn eine Positionsbestimmung basierend auf dem gleisseitigen Positionsbestimmungssystem 209 durchzuführen wäre.

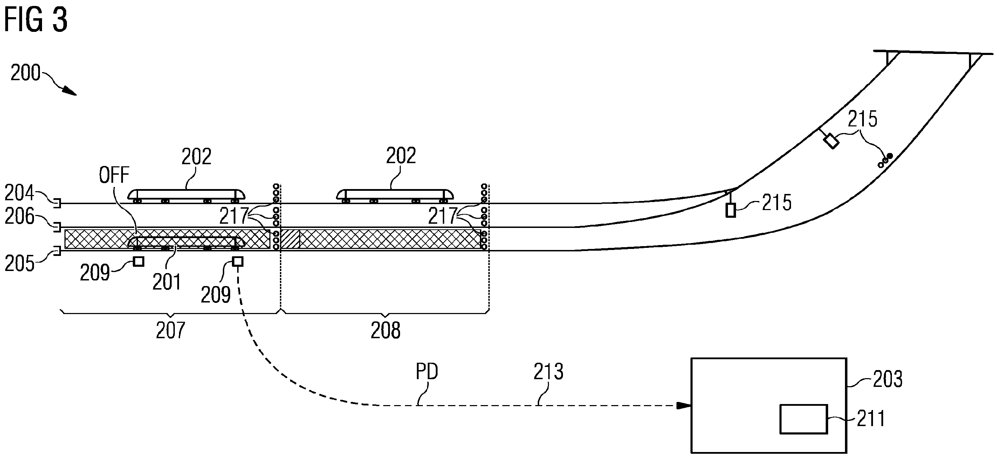

FIG 3 zeigt eine weitere schematische Darstellung eines Systems 200 zur Überwachung einer Ruheabschaltung eines Schienenfahrzeugs 201 gemäß einer Ausführungsform, wobei das System 200 in einem Zustand nach der Ruheabschaltung eines Schienenfahrzeugs 201 bei detektierter Bewegung des Fahrzeugs gezeigt ist.

FIG 3 zeigt eine weitere Situation des Systems 200 der Figuren 1 und **2.** In FIG 3 ist das Schienenfahrzeug 201 analog zur FIG 2 in die Ruheabschaltung OFF geschaltet. Abweichend zu der Darstellung in FIG 2 wird in der Darstellung in FIG 3 jedoch die Positionsbestimmung der Position des in die Ruheabschaltung geschalteten Schienenfahrzeugs 201 nicht basierend auf der zuletzt übermittelten Positionsangabe P des Schienenfahrzeugs 201 vorgenommen. Stattdessen wird die Bestimmung der Position des abgeschalteten Schienenfahrzeugs 201 basierend auf Positionsdaten PD des gleisseitigen Positionsbestimmungssystems 209 durchgeführt. Die Positionsdaten PD werden hierzu mittels einer entsprechenden Datenkommunikation 213 von dem gleisseitigen Positionsbestimmungssystem 209 an das Steuerzentrum 203 übermittelt.

Die in FIG 3 dargestellte Situation beschreibt den Fall, dass die wenigstens eine Sicherheitsvoraussetzung des Schienenfahrzeugs 201 nicht erfüllt ist. Erfindungsgemäß kann bei Nichterfüllung wenigstens einer Sicherheitsvoraussetzung die Positionsbestimmung des in die Ruheabschaltung OFF geschalteten Schienenfahrzeugs 201 basierend auf den Positionsdaten PD des gleisseitigen Positionsbestimmungssystems 209 bestimmt werden.

Das gleisseitige Positionsbestimmungssystem 209 kann beispielsweise eine Achszählereinheit umfassen, die eingerichtet ist, eine Bewegung wenigstens einer Achse des Schienenfahrzeugs zu ermitteln. Mittels der Achszählereinheit kann lediglich eine grobe Positionierung des Schienenfahrzeugs innerhalb des Gleissegments 207 erfolgen, mittels der das Schienenfahrzeug 201 innerhalb des Gleissegments 207 detektiert werden kann, jedoch keine genaue Position des Schienenfahrzeugs 201 innerhalb des Gleissegments 207 ermöglicht ist. In FIG 3 ist dies durch die Schraffur des Gleissegments 207 dargestellt, mittels der die Belegung des Gleissegments 207 illustriert ist. Das Steuerzentrum 203 kann somit lediglich die Belegung des Gleissegments 207 feststellen jedoch keine Positionierung des Schienenfahrzeugs 201 innerhalb des Gleissegments 207.

Bei Nichterfüllung wenigstens einer Sicherheitsvoraussetzung kann ferner das weitere Gleissegment 208 für weitere Schienenfahrzeuge zur Ruheabschaltung gesperrt werden. Die Sperrung des weiteren Gleissegments 208 ist ebenfalls durch eine Schraffur des jeweiligen Gleissegments 208 dargestellt.

Abweichend zu der Darstellung in FIG 2 wird somit das in die Ruheabschaltung OFF geschaltete Schienenfahrzeug 201 nicht analog zu einem sich weiterhin in einem Betriebszustand ON befindlichen Schienenfahrzeugs interpretiert, sondern aufgrund der unpräzisen Positionsbestimmung durch das gleisseitige Positionsbestimmungssystem 209 wird das gesamte Gleissegment 207 als belegt und somit für weitere Schienenfahrzeuge als gesperrt angesehen. Die Belegung bzw. Sperrung der Gleissegmente 207, 208 verläuft hierbei über die gesamte Länge des jeweiligen Gleissegments 207, 208.

Alternativ kann die gezeigte Situation auch dadurch eintreten, dass eine Bewegung des gemäß der Ausführungen zu FIG 2 und unter Erfüllung der Sicherheitsvoraussetzungen in die Ruheabschaltung OFF geschalteten Schienenfahrzeugs 201 innerhalb des Schienensegments 207 durch Sensordaten eines gleisseitig angeordneten Sensors registriert wurde, der eingerichtet ist, eine Bewegung des Schienenfahrzeugs innerhalb des jeweiligen Gleissegments zu registrieren. Der Sensor kann beispielsweise durch Sensoren des gleisseitigen Positionsbestimmungssystems 209 gebildet sein.

Bei Registrierung einer Bewegung des in die Ruheabschaltung OFF geschalteten Schienenfahrzeugs 201 innerhalb des jeweiligen Schienensegments 207 kann erfindungsgemäß eine Positionsbestimmung des Schienenfahrzeugs 207 basierend auf den Positionsdaten PD des gleisseitigen Positionsbestimmungssystems 209, bzw. basierend auf den Sensordaten des Sensors, durchgeführt werden. Alternativ oder zusätzlich kann bei Registrierung einer Bewegung des in die Ruheabschaltung geschalteten Schienenfahrzeugs wenigstens ein weiteres Gleissegments 208 des jeweiligen Abstellgleises 205 für weitere Schienenfahrzeuge gesperrt werden, da eine genaue Positionsbestimmung des Schienenfahrzeugs 201 nicht mehr möglich ist. Alternativ hierzu kann eine beliebige Anzahl weiterer Gleissegmente, beispielsweise alle Gleissegmente, des Abstellgleises 205 für weitere Schienenfahrzeuge gesperrt werden. Durch die Sperrung der weiteren Gleissegmente 208 kann ein gesicherter Betrieb gewährleistet und Kollisionen mit anderen Schienenfahrzeugen vermieden werden.

Das hier vorgestellte System und Verfahren sind insbesondere bei vollautomatisch betriebenen Schienenfahrzeugen von Interesse, bei denen nicht alternativ eine Fahrt auf Sicht durch entsprechend ausgebildetes Personal ermöglicht ist.

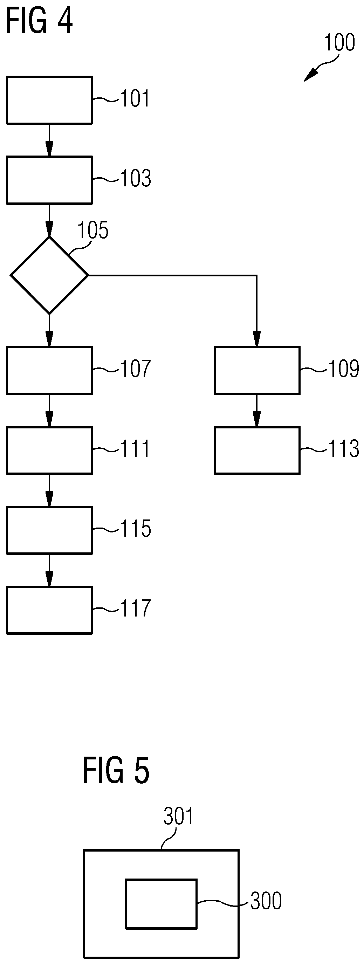

FIG 4 zeigt ein Flussdiagramm eines Verfahrens 100 zur Überwachung einer Ruheabschaltung eines Schienenfahrzeugs 201 gemäß einer Ausführungsform.

Zur Überprüfung einer Ruheabschaltung eines Schienenfahrzeugs 201 durch das erfindungsgemäße Verfahren 100 wird zunächst in einem Verfahrensschritt 101 eine Positionsangabe P eines Schienenfahrzeugs 201 empfangen, wobei die Positionsangabe P eine Positionierung des Schienenfahrzeugs 201 innerhalb eines Gleissegments 207 angibt, wobei die Positionsbestimmung auf einem fahrzeugseitigen Positionsbestimmungssystem basiert.

In einem weiteren Verfahrensschritt 103 wird eine Abschaltbestätigung OFF_Ack des Schienenfahrzeugs 201 empfangen, in der eine bevorstehende Schaltung des Schienenfahrzeugs 201 in eine Ruheabschaltung OFF angekündigt wird.

In einem Verfahrensschritt 105 wird überprüft, ob wenigstens eine Sicherheitsvoraussetzung durch das Schienenfahrzeug 201 erfüllt ist, wobei die Sicherheitsvoraussetzung derart ausgestaltet ist, dass bei Erfüllung eine Beibehaltung der Positionierung des Schienenfahrzeugs 201 in der Ruheabschaltung OFF mit einer hohen Wahrscheinlichkeit eintritt.

Falls ermittelt wird, dass wenigstens eine Sicherheitsvoraussetzung erfüllt ist, alternativ kann hierzu vorgesehen sein, dass eine Mehrzahl bzw. alle bei der Überprüfung berücksichtigten Sicherheitsvoraussetzungen erfüllt sein müssen, wird eine Positionsbestimmung des in die Ruheabschaltung OFF geschalteten Schienenfahrzeugs 201 basierend auf einer zuletzt durch das Schienenfahrzeug 201 übermittelten Positionsangabe P in einem Verfahrensschritt 107 durchgeführt. Zusätzlich wird in einem weiteren Verfahrensschritt 111 ein weiteres Gleissegment 208 des jeweiligen Abstellgleises 205 für eine Ruheabschaltung weiterer Schienenfahrzeuge freigegeben.

In einem weiteren Verfahrensschritt 115 können ferner Sensordaten eines Sensors empfangen werden, der gleisseitig am jeweiligen Gleissegment 207 angeordnet ist und eingerichtet ist, eine Bewegung des Schienenfahrzeugs 201 innerhalb des Gleissegments 207 zu registrieren.

Wird basierend auf den Sensordaten des Sensors eine Bewegung des Schienenfahrzeugs 201, das sich bereits in der Ruheabschaltung OFF befindet, innerhalb des Gleissegments 207 registriert, so kann in einem weiteren Verfahrensschritt 117 eine Sperrung des weiteren Gleissegments 208 für weitere Schienenfahrzeuge bewirkt werden.

Wird im Verfahrensschritt 105 hingegen ermittelt, dass wenigstens eine Sicherheitsvoraussetzung nicht erfüllt ist, wird in einem Verfahrensschritt 109 eine Positionsbestimmung einer Position des bereits in die Ruheabschaltung OFF geschalteten Schienenfahrzeugs 201 basierend auf Positionsdaten PD des gleisseitig angeordneten Positionsbestimmungssystems 209 bewirkt. Zusätzlich oder alternativ hierzu wird in einem Verfahrensschritt 113 eine Sperrung des wenigstens einen weiteren Gleissegments 208 des jeweiligen Abstellgleises 205 bewirkt.

Das erfindungsgemäße Verfahren 100 ist auf eine beliebige Anzahl von Schienenfahrzeugen 201, 202 und eine beliebige Anzahl von Abstellgleisen 205, 206 bzw. Gleissegmenten 207, 208 anwendbar. Das erfindungsgemäße Verfahren ist in eine kommunikationsbasierte Schienenfahrzeugsteuerung (CBTC) integrierbar bzw. in Kooperation mit einer solchen ausführbar.

Insbesondere ist das erfindungsgemäße Verfahren auf Schienenfahrzeuge anwendbar, die für einen Schienenfahrzeugbetrieb mit Fahrt auf Sicht und/oder für eine manuelle Fahrt mit Schienenfahrzeugbeeinflussung und/oder für einen halbautomatischen Schienenfahrzeugbetrieb und/oder für einen begleiteten fahrerlosen Schienenfahrzeugbetrieb und/oder für einen vollautomatischen fahrerlosen Schienenfahrzeugbetrieb ausgebildet sind.

FIG 5 zeigt eine schematische Darstellung eines Computerprogrammprodukts 300.

Figur 5 zeigt ein Computerprogrammprodukt 300, umfassend Befehle, die bei der Ausführung des Programms durch eine Recheneinheit dieses veranlassen, das Verfahren 100 nach einer der oben genannten Ausführungsformen auszuführen. Das Computerprogrammprodukt 300 ist in der gezeigten Ausführungsform auf einem Speichermedium 301 gespeichert. Das Speichermedium 301 kann hierbei ein beliebiges aus dem Stand der Technik bekanntes Speichermedium sein.

### Bezugszeichenliste

- 100: Verfahren
- 101: Empfangen einer Positionsangabe
- 103: Empfangen einer Abschaltbestätigung
- 105: Überprüfen einer Sicherheitsvoraussetzung
- 107: Bestimmen der Position des Schienenfahrzeugs
- 109: Bestimmen der Position des Schienenfahrzeugs
- 111: Freigeben eines Gleissegments
- 113: Sperren des Gleissegments
- 115: Empfangen von Sensordaten
- 117: Sperren des Gleissegments

- 200: System
- 201: Schienenfahrzeug
- 202: Schienenfahrzeug
- 203: Steuerzentrum
- 204: Abstellgleis
- 205: Abstellgleis
- 206: Abstellgleis
- 207: Gleissegment
- 208: Gleissegment
- 209: Positionsbestimmungssystem
- 211: Recheneinheit
- 213: Datenkommunikation
- 215: Signalleuchte
- 217: Signalleuchte

- ON: Betriebsmodus
- OFF: Ruheabschaltung
- OFF_Ack: Abschaltbestätigung
- P: Positionsangabe
- PD: Positionsdaten

## Patentansprüche

1. Verfahren (100) zur Überwachung einer Ruheabschaltung eines Schienenfahrzeugs (201), wobei das Verfahren (100) umfasst:
- Empfangen (101) einer Positionsangabe (P) eines in einem Gleissegment (207) eines Abstellgleises (205) positionierten Schienenfahrzeugs (201);
- Empfangen (103) einer Abschaltbestätigung (OFF_Ack) des Schienenfahrzeugs (201), wobei die Abschaltbestätigung (OFF_Ack) angibt, dass das Schienenfahrzeug (201) in eine Ruheabschaltung (OFF) geschaltet wird;
- Überprüfen (105) ob das Schienenfahrzeug (201) beim Schalten in die Ruheabschaltung (OFF) wenigstens eine Sicherheitsvoraussetzung erfüllt, wobei die Sicherheitsvoraussetzung eine sichere Positionierung des Schienenfahrzeugs (201) in der Ruheabschaltung (OFF) bestätigt; und
- falls die wenigstens eine Sicherheitsvoraussetzung erfüllt ist, Bestimmen (107) einer Position des Schienenfahrzeugs (201) in Ruheabschaltung (OFF) in dem jeweiligen Gleissegment (207) basierend auf der vom Schienenfahrzeug (201) übertragenen Positionsangabe (P) des Schienenfahrzeugs (201) und Freigeben (111) wenigstens eines weiteren Gleissegments (208) des Abstellgleises (205) für eine Ruheabschaltung wenigstens eines weiteren Schienenfahrzeugs,
- falls die wenigstens eine Sicherheitsvoraussetzung nicht erfüllt ist, Bestimmen (109) einer Position des Schienenfahrzeugs (201) in Ruheabschaltung (OFF) in dem jeweiligen Gleissegment (207) basierend auf Positionsdaten (PD) eines gleisseitigen Positionsbestimmungssystems (209) und Sperren (113) des wenigstens einen weiteren Gleissegments (208) des Abstellgleises (205) für eine Ruheabschaltung wenigstens eines weiteren Schienenfahrzeugs.

2. Verfahren (100) nach Anspruch 1, wobei Sicherheitsvoraussetzungen umfassen:
- dass das Gleissegment (207) ein für eine Ruheabschaltung eines Schienenfahrzeugs (201) vorgesehenes Gleissegment (207) ist; und/oder
- dass das Gleissegment (207) eine Steigung aufweist, die unterhalb eines vorbestimmten Grenzwerts liegt; und/oder
- dass eine Feststellbremse des Schienenfahrzeugs (201) betätigt ist; und/oder
- dass ein Schalten des Schienenfahrzeugs (201) in die Ruheabschaltung gemäß einem in einem Steuerungsprotokoll vordefinierten Abschaltvorgang für eine Abschaltung von Schienenfahrzeugen in eine Ruheabschaltung eingeleitet ist; und/oder
- dass eine Bereitschaftsangabe des Schienenfahrzeugs (201) zum Schalten in die Ruheabschaltung empfangen wurde.

3. Verfahren (100) nach Anspruch 2, wobei das Abstellgleis (205) gemäß dem Grenzwert im Gleissegment (207) planar und ohne Steigung bzw. Gefälle ausgebildet ist.

4. Verfahren (100) nach Anspruch 2 oder 3, wobei das Schalten des Schienenfahrzeugs (201) in die Ruheabschaltung durch eine automatische Abschalteinrichtung einer automatischen Schienenfahrzeugüberwachung des Schienenfahrzeugs (201) oder durch ein autorisiertes Schienenfahrzeugpersonal eingeleitet wird.

5. Verfahren (100) nach Anspruch 2, 3 oder 4, wobei das Steuerungsprotokoll durch eine kommunikationsbasierte Schienenfahrzeugsteuerung gebildet ist.

6. Verfahren (100) nach einem der voranstehenden Ansprüche 2 bis 5, wobei die empfangene Positionsangabe (P) des Schienenfahrzeugs (201) als aktuelle Position des Schienenfahrzeugs (201) in der Ruheabschaltung in dem jeweiligen Gleissegment (207) gespeichert und/oder das wenigsten eine weitere Gleissegment (208) des Abstellgleises (205) für eine Ruheabschaltung wenigstens eines weiteren Schienenfahrzeugs freigegeben werden, nur falls alle der in Anspruch 2 genannten Sicherheitsvoraussetzungen erfüllt sind.

7. Verfahren (100) nach einem der voranstehenden Ansprüche, ferner umfassend:
- Empfangen (115) von Sensordaten wenigstens eines streckenseitig am Gleissegment (207) des Abstellgleises (205) angeordneten Sensors (209), wobei der Sensor (209) eingerichtet ist, eine Bewegung des Schienenfahrzeugs (201) innerhalb des Gleissegments (207) zu registrieren; und
- Sperren (117) des wenigstens einen weiteren Gleissegments (208) des Abstellgleises (205) für eine Ruheabschaltung wenigstens eines weiteren Schienenfahrzeugs, falls anhand der Sensordaten eine Bewegung des in die Ruheabschaltung geschalteten Schienenfahrzeugs (201) innerhalb des Gleissegments (207) registriert wird.

8. Recheneinheit (211), wobei die Recheneinheit (211) ausgebildet ist, das Verfahren (100) zur Überwachung einer Ruheabschaltung eines Schienenfahrzeugs (201) nach einem der voranstehenden Ansprüche 1 bis 7 auszuführen.

9. System (200) zur Überwachung einer Ruheabschaltung eines Schienenfahrzeugs (201) mit einem Steuerzentrum (203) zum Steuern eines Schienenverkehrs und wenigstens einem Abstellgleis (205) mit einer Mehrzahl von Gleissegmenten (207) für die Ruheabschaltung von Schienenfahrzeugen (201), wobei am Abstellgleis (205) innerhalb wenigstens eines Gleissegments (207) ein gleisseitiges Positionsbestimmungssystem (209) angeordnet ist, das ausgebildet ist, eine Position eines Schienenfahrzeugs (201) innerhalb des Gleissegments (207) zu bestimmen, wobei das Steuerzentrum (203) eingerichtet ist, mittels einer Datenkommunikation mit wenigstens einem Schienenfahrzeug (201) zu kommunizieren und Daten des gleisseitigen Positionsbestimmungssystems (209) zu empfangen, und wobei das Steuerzentrum (203) eine Recheneinheit (211) nach Anspruch 8 umfasst.

10. System (200) nach Anspruch 9, wobei das System ferner einen Sensor umfasst, wobei der Sensor innerhalb wenigstens eines Gleissegments am Abstellgleis angeordnet ist, und wobei der Sensor eingerichtet ist, eine Bewegung des Schienenfahrzeugs innerhalb des Gleissegments zu registrieren.

11. System (200) nach Anspruch 10, wobei der Sensor ein Sensor des gleisseitigen Positionsbestimmungssystems ist.

12. System (200) nach einem der voranstehenden Ansprüche 9 bis 11, wobei das gleisseitige Positionsbestimmungssystem (209) wenigstens eine Achszählereinheit umfasst.

13. System (200) nach einem der voranstehenden Ansprüche 9 bis 12, wobei das Schienenfahrzeug (201) für einen Schienenfahrzeugbetrieb mit Fahrt auf Sicht und/oder für eine manuelle Fahrt mit Schienenfahrzeugbeeinflussung und/oder für einen halbautomatischen Schienenfahrzeugbetrieb und/oder für einen begleiteten fahrerlosen Schienenfahrzeugbetrieb und/oder für einen vollautomatischen fahrerlosen Schienenfahrzeugbetrieb ausgebildet ist.

14. Computerprogrammprodukt (300) umfassend Befehle, die bei der Ausführung des Programms durch eine Datenverarbeitungseinheit diese veranlassen, das Verfahren (100) zur Überwachung einer Ruheabschaltung eines Schienenfahrzeugs nach einem der voranstehenden Ansprüche 1 bis 7 auszuführen.

## Claims

1. Method (100) for monitoring a deactivation of a railway vehicle (201), wherein the method (100) comprises:
- receiving (101) a position indication (P) of a railway vehicle (201) positioned in a track segment (207) of a stabling track (205);
- receiving (103) a deactivation acknowledgment (OFF_Ack) of the railway vehicle (201), wherein the deactivation acknowledgement (OFF_Ack) indicates that the railway vehicle (201) is switched into a deactivated state (OFF);
- checking (105) whether the railway vehicle (201) fulfils at least one safety prerequisite when switched into the deactivated state (OFF), wherein the safety prerequisite acknowledges a safe positioning of the railway vehicle (201) in the deactivated state (OFF); and
- if the at least one safety prerequisite is fulfilled, determining (107) a position of the railway vehicle (201) in the deactivated state (OFF) in the respective track segment (207) based on the position indication (P) of the railway vehicle (201) transmitted from the railway vehicle (201), and releasing (111) at least one further track segment (208) of the stabling track (205) for a deactivation of at least one further railway vehicle,
- if the at least one safety prerequisite is not fulfilled, determining (109) a position of the railway vehicle (201) in the deactivated state (OFF) in the respective track segment (207) based on position data (PD) of a trackside position determination system (209), and blocking (113) the at least one further track segment (208) of the stabling track (205) for a deactivation of at least one further railway vehicle.

2. Method (100) according to claim 1, wherein safety prerequisites comprise:
- that the track segment (207) is a track segment (207) provided for a deactivation of a railway vehicle (201); and/or
- that the track segment (207) has a gradient which lies below a predetermined limit value; and/or
- that a parking brake of the railway vehicle (201) is actuated; and/or
- that a switching of the railway vehicle (201) into the deactivated state is initiated according to a deactivation process predefined in a control protocol for switching railway vehicles into a deactivated state; and/or
- that an indication of the readiness of the railway vehicle (201) to be switched into the deactivated state has been received.

3. Method (100) according to claim 2, wherein the stabling track (205) is embodied in the track segment (207) in a planar manner and without upward or downward gradients in accordance with the limit value.

4. Method (100) according to claim 2 or 3, wherein the switching of the railway vehicle (201) into the deactivated state is initiated by an automatic deactivation facility of an automatic railway vehicle monitoring system of the railway vehicle (201) or by an authorized railway vehicle staff member.

5. Method (100) according to claim 2, 3 or 4, wherein the control protocol is formed by a communication-based railway vehicle control.

6. Method (100) according to one of the preceding claims 2 to 5, wherein the received position indication (P) of the railway vehicle (201) is stored as the current position of the railway vehicle (201) in the deactivated state in the respective track segment (207) and/or the at least one further track segment (208) of the stabling track (205) is released for a deactivation of at least one further railway vehicle only if all the safety prerequisites cited in claim 2 are fulfilled.

7. Method (100) according to one of the preceding claims, further comprising:
- receiving (115) sensor data of at least one sensor (209) arranged on the track side on the track segment (207) of the stabling track (205), wherein the sensor (209) is configured to register a movement of the railway vehicle (201) within the track segment (207); and
- blocking (117) the at least one further track segment (208) of the stabling track (205) for a deactivation of at least one further railway vehicle if a movement of the railway vehicle (201) switched into the deactivated state is registered within the track segment (207) on the basis of the sensor data.

8. Computing unit (211), wherein the computing unit (211) is embodied to carry out the method (100) for monitoring a deactivation of a railway vehicle (201) according to one of the preceding claims 1 to 7.

9. System (200) for monitoring a deactivation of a railway vehicle (201) with a control centre (203) for controlling railway traffic and at least one stabling track (205) with a plurality of track segments (207) for the deactivation of railway vehicles (201), wherein a trackside position determination system (209) is arranged on the stabling track (205) within at least one track segment (207) and is embodied to determine a position of a railway vehicle (201) within the track segment (207), wherein the control centre (203) is configured to communicate with at least one railway vehicle (201) by means of data communication and to receive data of the trackside position determination system (209), and wherein the control centre (203) comprises a computing unit (211) according to claim 8.

10. System (200) according to claim 9, wherein the system further comprises a sensor, wherein the sensor is arranged on the stabling track within at least one track segment, and wherein the sensor is configured to register a movement of the railway vehicle within the track segment.

11. System (200) according to claim 10, wherein the sensor is a sensor of the trackside position determination system.

12. System (200) according to one of the preceding claims 9 to 11, wherein the trackside position determination system (209) comprises at least one axle counter unit.

13. System (200) according to one of the preceding claims 9 to 12, wherein the railway vehicle (201) is embodied for railway vehicle operation with driving on sight and/or for manual driving with railway vehicle control and/or for semiautomatic railway vehicle operation and/or for attended driverless railway vehicle operation and/or for fully automatic driverless railway vehicle operation.

14. Computer program product (300) comprising commands which, when the program is executed by a data processing unit, cause said data processing unit to carry out the method (100) for monitoring a deactivation of a railway vehicle according to one of the preceding claims 1 to 7.

## Revendications

1. Procédé (100) de surveillance d'un arrêt de repos d'un véhicule (201) ferroviaire, dans lequel le procédé (100) comprend :
- réception (101) d'une indication (P) de position d'un véhicule (201) ferroviaire en position dans un segment (207) d'une voie (205) de garage ;
- réception (103) d'une confirmation d'arrêt (OFF_Ack) du véhicule (201) ferroviaire, l'actionnement (OFF_Ack) d'arrêt indiquant que le véhicule (201) ferroviaire est mis dans un arrêt (OFF) de repos ;
- contrôle (105) du point de savoir, si le véhicule (201) ferroviaire, lors de la mise dans l'arrêt (OFF) de repos, satisfait au moins une condition de sécurité, dans lequel la condition de sécurité confirme une mise en position sécurisée du véhicule (201) ferroviaire dans l'arrêt (OFF) de repos ; et
- si la au moins une condition de sécurité est satisfaite, détermination (107) d'une position du véhicule (201) ferroviaire dans l'arrêt (OFF) de repos dans le segment (207) de voie respectif, reposant sur l'indication (P) de position, transmise par le véhicule (201) ferroviaire, du véhicule (201) ferroviaire et libération (111) du au moins un autre segment (208) de la voie (205) de garage pour un arrêt de repos d'au moins un autre véhicule ferroviaire,
- si la au moins une condition de sécurité n'est pas satisfaite, détermination (109) d'une position du véhicule (201) ferroviaire dans l'arrêt (OFF) de repos dans le segment (207) de voie respectif, reposant sur des données (PD) de position d'un système (209) de détermination de position sur la voie et blocage (113) du au moins un autre segment (208) de la voie (205) de garage pour un arrêt de repos d'au moins un autre véhicule ferroviaire.

2. Procédé (100) suivant la revendication 1, dans lequel des conditions de sécurité comprennent :
- que le segment (207) de voie est un segment (207) de voie prévu pour un arrêt de repos pour un véhicule (201) ferroviaire ; et/ou
- que le segment (207) de voie a une pente, qui est en dessous d'une valeur limite déterminée à l'avance ; et/ou
- qu'un frein de stationnement (201) du véhicule ferroviaire est actionné ; et/ou
- qu'une mise du véhicule (201) ferroviaire dans l'arrêt de repos suivant une opération d'arrêt définie à l'avance dans un protocole de commande pour un arrêt de véhicule ferroviaire dans un arrêt de repos est engagée ; et/ou
- qu'une indication de disponibilité du véhicule (201) ferroviaire pour la mise dans l'arrêt de repos a été reçue.

3. Procédé (100) suivant la revendication 2, dans lequel la voie (205) de garage est constituée, suivant la valeur limite dans le segment (207) de voie, plane et sans montée ou descente.

4. Procédé (100) suivant la revendication 2 ou 3, dans lequel la mise du véhicule (201) ferroviaire dans l'arrêt de repos est initiée par un dispositif d'arrêt automatique d'une surveillance automatique de véhicules du véhicule (201) ferroviaire ou par un personnel autorisé de véhicule ferroviaire.

5. Procédé (100) suivant la revendication 2, 3 ou 4, dans lequel le protocole de commande est formé d'une commande de véhicule ferroviaire reposant sur une communication.

6. Procédé (100) suivant l'une des revendications 2 à 5 précédentes, dans lequel les indications (P) de position du véhicule (201) ferroviaire, qui sont reçues en étant mises en mémoire comme position en cours du véhicule (201) ferroviaire dans l'arrêt de repos dans le segment (207) de voie respectif et/ou le au moins un autre segment (208) de la voie (205) de garage sont en libération pour un arrêt de repos d'au moins un autre véhicule ferroviaire, seulement si toutes les conditions de sécurité mentionnées à la revendication 2 sont satisfaites.

7. Procédé (100) suivant l'une des revendications précédentes, comprenant en outre :
- réception (115) de données d'au moins un capteur (209) disposé sur la voie sur le segment (207) de la voie (205) de garage, dans lequel le capteur (209) est agencé pour enregistrer un déplacement du véhicule (201) ferroviaire, dans le segment (207) de la voie ; et
- blocage (117) du au moins un autre segment (208) de la voie (205) de garage pour un arrêt de repos d'au moins un autre véhicule ferroviaire, si, à l'aide des données de capteur, on enregistre un déplacement du véhicule (201) ferroviaire mis dans l'arrêt de repos dans le segment (207) de la voie.

8. Unité (211) informatique, dans laquelle l'unité (211) informatique est constituée pour exécuter le procédé (100) de surveillance d'un arrêt de repos d'un véhicule (201) ferroviaire suivant l'une des revendications 1 à 7 précédentes.

9. Système (200) de surveillance d'un arrêt de repos d'un véhicule (201) ferroviaire, comprenant un centre (203) de commande pour la commande d'un trafic ferroviaire et au moins une voie (205) de garage ayant une pluralité de segments (207) de voie pour l'arrêt de repos de véhicules (201) ferroviaires, dans lequel à la voie (205) de garage dans au moins un segment (207) de la voie est disposé sur la voie un système (209) de détermination de position sur la voie, qui est constitué pour déterminer une position d'un véhicule (201) ferroviaire dans le segment (207) de la voie, dans lequel le centre (203) de commande est agencé pour, au moyen d'une communication de données, communiquer avec au moins un véhicule (201) ferroviaire et recevoir des données du système (209) de détermination de position sur la voie, et dans lequel le centre (203) de commande comprend une unité (211) informatique suivant la revendication 8.

10. Système (200) suivant la revendication 9, dans lequel le système comprend en outre un capteur, dans lequel le capteur est disposé dans au moins un segment de la voie de garage, et dans lequel le capteur est agencé pour enregistrer un déplacement du véhicule ferroviaire dans le segment de la voie.

11. Système (200) suivant la revendication 10, dans lequel le capteur est un capteur du système de détermination de position sur la voie.

12. Système (200) suivant l'une des revendications 9 à 11 précédentes, dans lequel le système (209) de détermination de position sur la voie comprend au moins une unité de compteur d'essieux.

13. Système (200) suivant l'une des revendications 9 à 12 précédentes, dans lequel le véhicule (201) ferroviaire est constitué pour un fonctionnement de véhicule ferroviaire à circulation à vue et/ou pour une circulation manuelle en influençant le véhicule ferroviaire et/ou pour un fonctionnement de véhicule ferroviaire semi-automatique et/ou pour un fonctionnement de véhicule ferroviaire accompagné sans conducteur et/ou pour un fonctionnement de véhicule ferroviaire entièrement automatique sans conducteur.

14. Produit (300) de programme d'ordinateur, comprenant des instructions qui, lors de l'exécution du programme par une unité de traitement de données, font que celle-ci exécute le procédé (100) de surveillance d'un arrêt de repos d'un véhicule ferroviaire suivant l'une des revendications 1 à 7 précédentes.
